# EUROPEAN PATENT SPECIFICATION

(11) **EP 3 719 448 B1**
(45) Date of publication and mention of the grant of the patent: **22.10.2025**
(21) Application number: 20159538.6
(22) Date of filing: 26.02.2020
(51) Int. Cl.: G01C 21/28, G01C 21/10, H04W 64/00

(54) **MOVING METHOD DETERMINATION SYSTEM AND MOVING METHOD DETERMINATION METHOD**
SYSTEM ZUR BESTIMMUNG EINES BEWEGUNGSVERFAHRENS UND VERFAHREN ZUR BESTIMMUNG EINES BEWEGUNGSVERFAHRENS
SYSTÈME DE DÉTERMINATION DE MÉTHODE DE DÉPLACEMENT ET PROCÉDÉ DE DÉTERMINATION DE MÉTHODE DE MOUVEMENT

(30) Priority: 05.03.2019 JP 2019039839
(43) Date of publication of application: 07.10.2020
(73) Proprietor: Hitachi, Ltd., Tokyo 100-8280 (JP)
(72) Inventor: HIRASHIMA, Youko, Tokyo 100-8280 (JP); YANO, Kojin, Tokyo 100-8280 (JP)
(74) Representative: Mewburn Ellis LLP

(56) References cited:
- US-A1- 2017 213 261
- VASSILIS KOSTAKOS ET AL: "Wireless detection of end-to-end passenger trips on public transport buses", INTELLIGENT TRANSPORTATION SYSTEMS (ITSC), 2010 13TH INTERNATIONAL IEEE CONFERENCE ON, IEEE, PISCATAWAY, NJ, USA, 19 September 2010 (2010-09-19), pages 1795 - 1800, XP031792606, ISBN: 978-1-4244-7657-2

## Description

### Technical Field

The present invention relates to a technology for determining a moving method from a moving history.

### Background Art

A movement date and time of a person, a departure location, an arrival location, and a moving method are ascertained, and thus, governments and transportation operators can plan a road and a route that meets a demand. Commercial facilities discriminate moving methods of persons who move near the facilities, and can provide advertisements and recommendations of stores near a bus stop to a target person who uses a bus or stores that can be accessed by a vehicle to a target person who uses another vehicle so as to correspond to the moving method. As stated above, since there is a possibility that new business opportunities can be discovered by ascertaining the moving methods of people, technologies for estimating the moving methods from positional information collected by mobile terminals and vibration characteristics obtained as sensor data are disclosed (JP 5816748 B and JP 2018-55461 A ).

Vassilis Kostakos et al: "Wireless detection of end-to-end passenger trips on public transport buses", Intelligent Transportation Systems (ITSC), 2010 13TH International IEEE Conference ON, IEEE, Piscataway, NJ, USA, 19 September 2010 (2010-09-19), pages 1795-1800, discloses a method for determining bus travels of individual passengers. US 2017/213261 A1 refers to a method for detecting riders and managing as well as optimizing their shared transport.

### Summary of Invention

### Technical Problem

JP 5816748 B discloses a method of associating a discrimination reference value with each environment such as a road condition and discriminating the moving method of the terminal by using the discrimination reference value selected according to the sensor data and the environment when the moving method of the terminal having the sensor mounted thereon is determined by using the sensor data. However, a vibration pattern of a vehicle is different depending on the type of the vehicle, whether the vehicle is an EV or a gasoline car, the type of the vehicle, the size of the vehicle body, and even a boarding position, and it is considered that it is difficult to distinguish between a bus and other vehicles in various patterns.

JP 2018-55461 A discloses a method of acquiring a moving trajectory of the target person from a set of positioning points including position coordinates and positioning timings measured by the terminal of the target person, determining whether or not the moving trajectory is present in a predetermined range for the route information, and determining the moving method of the target person based the moving speed calculated from the moving trajectory. However, even though the moving trajectory is present within the predetermined range for the bus route information, it is considered that it is difficult to discriminate whether the target person uses the bus or moves by using a private vehicle based on the moving speed.

Meanwhile, the Ministry of Land, Infrastructure, Transport and Tourism has announced a "standard bus information format" as a format for disclosing information on buses. Bus operators that disclose bus stops, bus routes, bus services, and bus positional information are included in this format. There is a need for a technology which is necessary to cope with transportation services other than the buses in the future and distinguishes between the moving methods of the user by using information such as the sensor data and the moving trajectory obtained from the terminal which moves and information related on the operations of transportation services such as buses such as bus stops, bus routes, bus services, and bus positional information.

An object of the present invention is to provide a moving method determination system and a moving method determination method capable of distinguishing between a moving method using a transportation service and other moving methods.

### Solution to Problem

The object is solved by the independent claims.

### Advantageous Effects of Invention

According to the aspect of the present invention, it is possible to distinguish between a moving method using a transportation service and other moving methods.

### Brief Description of Drawings

Fig. 1 is a diagram illustrating a system configuration and functional blocks according to an embodiment.
Fig. 2A is a diagram illustrating positional information according to the present embodiment.
Fig. 2B is a diagram illustrating a moving history according to the present embodiment.
Fig. 3 is a diagram illustrating bus stop information according to the present embodiment.
Fig. 4A is a diagram illustrating service information according to the present embodiment.
Fig. 4B is a diagram illustrating service positional information according to the present embodiment.
Fig. 5A is a diagram illustrating a moving method determination rule (speed condition) according to the present embodiment.
Fig. 5B is a diagram illustrating a moving method determination rule (distance condition) according to the present embodiment.
Fig. 6A is a diagram illustrating road network information according to the present embodiment.
Fig. 6B is a diagram illustrating route network information according to the present embodiment.
Fig. 7 is a diagram illustrating a system configuration according to the present embodiment.
Fig. 8 is a diagram illustrating a moving method determination flow according to the present embodiment.
Fig. 9 is a view illustrating a route determination flow in the moving method determination flow according to the present embodiment.

### Description of Embodiments

### First Embodiment

Hereinafter, embodiments of the present invention will be described with reference to the drawings. The following description and drawings are examples for describing the present invention, and are appropriately omitted and simplified in order to clarify the description. The present invention can be implemented in other various forms. Unless otherwise limited, each component may be singular or plural.

Positions, sizes, shapes, and ranges of components illustrated in the drawings may not necessarily represent actual positions, sizes, shapes, and ranges in order to facilitate understanding of the invention. Thus, the present invention is not necessarily limited to the positions, sizes, shapes, and ranges disclosed in the drawings.

In the following description, various pieces of information may be described by using expressions such as a "table" and a "list", but various pieces of information may be expressed by a data structure other than a table or list. "XX table" and "XX list" may be referred to as "XX information" in order to indicate that these pieces of information do not depend on the data structure. When identification information is described, expressions such as "identification information", an "identifier", a "name", an "ID", and a "number" are used, but these pieces of information are interchangeable.

When there is a plurality of components having the same or similar functions, the plurality of components will be described with different subscripts given to the same reference signs. In this case, when there is no need to distinguish between the plurality of components, the plurality of components will be described with the subscripts omitted.

Although processing performed by executing a program may be described in the following description, the program is executed by a processor (for example, a CPU or a GPU), and thus, the processor as a processing subject may appropriately perform predetermined processing by using a storage device (for example, memory) and/or an interface device (for example, communication port). Similarly, the processing subject that performs the processing performed by executing the program may be a controller having a processor, an apparatus, a system, a computer, or a node. The processing subject that performs the processing performed by executing the program may be an arithmetic operational unit, and may include a dedicated circuit (for example, an FPGA or an ASIC) for performing specific processing.

The program may be installed on an apparatus such as a computer from a program source. The program source may be, for example, a program distribution server or a computer-readable storage medium. When the program source is a program distribution server, the program distribution server may include a processor and a storage device that stores a program to be distributed, and the processor of the program distribution server may distribute the program to be distributed to another computer. In the following description, two or more programs may be realized as one program, or one program may be realized as two or more programs.

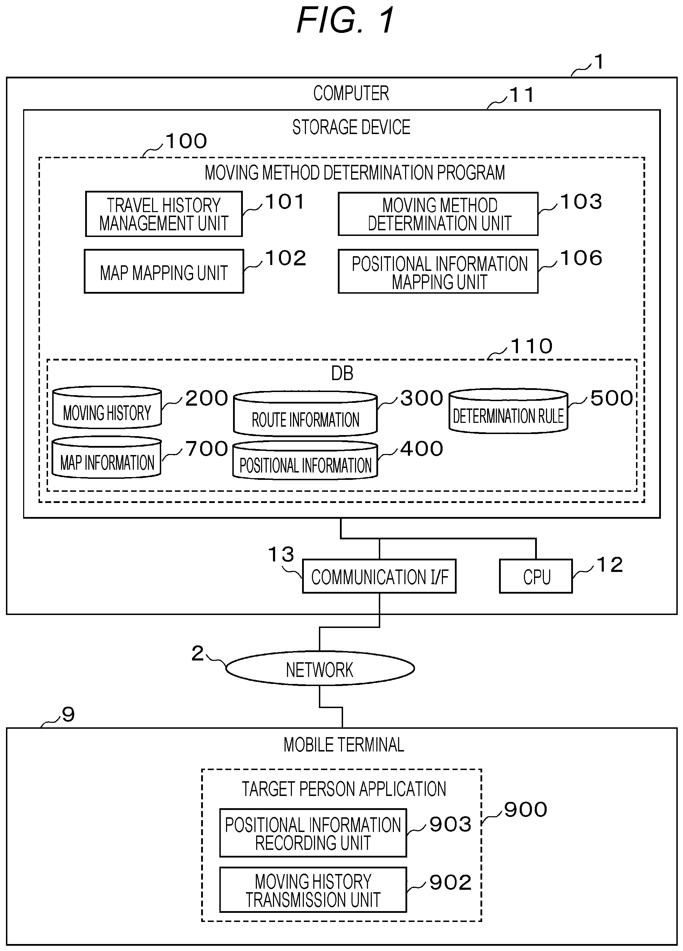

Fig. 1 is a diagram illustrating a system configuration and functional blocks of the present embodiment. The system configuration of the present embodiment is, for example, a moving method determination system that includes a computer 1 which determines a moving method and a mobile terminal 9. The computer 1 and the mobile terminal 9 are connected via a network 2.

The computer 1 is a general information processing apparatus such as a personal computer (PC) or a server as hardware, and includes, for example, a CPU 12, a communication interface (I/F) 13, and a storage device 11. The storage device 11 stores a moving method determination program 100 and a database (DB) 110. A moving history 200, route information 300, positional information 400, determination rule 500, and method map information 700 are stored in the DB 110. As will be described below, bus stop information 310 is stored in the route information 300, and service information 410 and service positional information 420 are stored in the positional information 400.

The moving method determination program 100 includes a travel history management unit 101, a map mapping unit 102, a moving method determination unit 103, and a positional information mapping unit 106.

The mobile terminal 9 of a target person who is a user who uses the system for moving is a general mobile terminal apparatus such as a smartphone as hardware, and includes, for example, a CPU, a communication I/F, and a storage device, as in the computer 1. The storage device stores a target person application 900. The application 900 includes a moving history transmission unit 902 and a positional information recording unit 903.

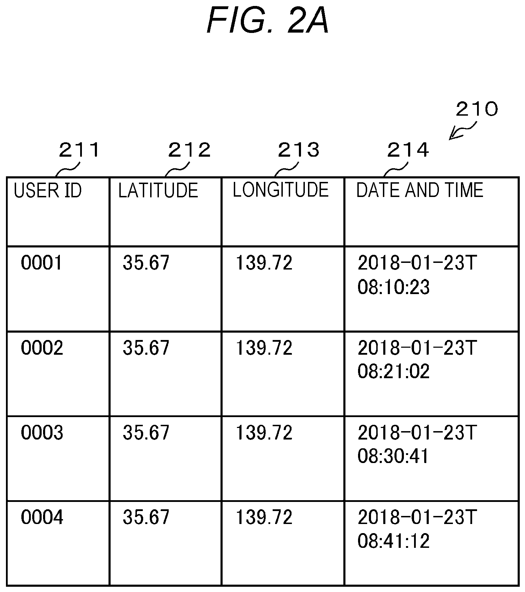

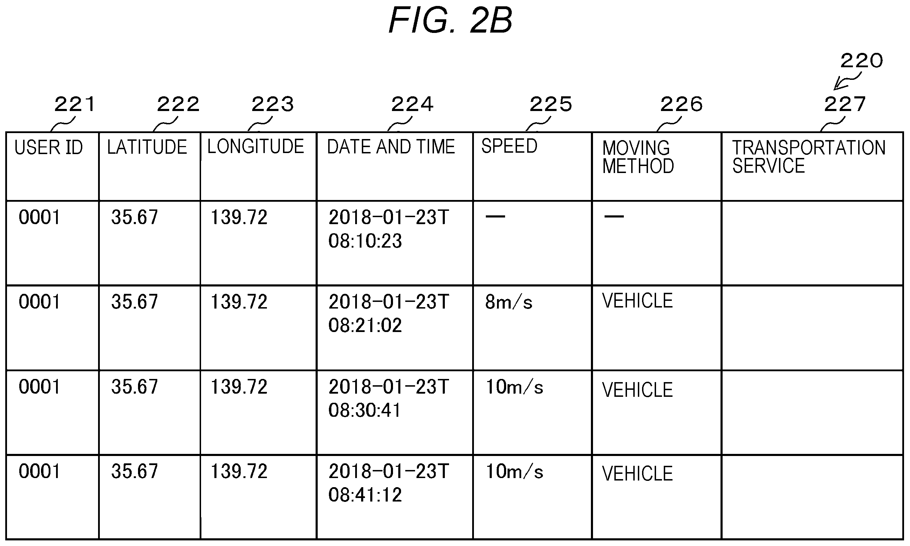

An outline of an operation of each component will be described. Initially, the travel history management unit 101 of the moving method determination program 100 acquires positional information including the latitude, longitude, and measurement timing of the mobile terminal 9 from the target person application 900 installed on the mobile terminal 9 as a moving method determination target person via the communication I/F 13, and records the acquired positional information in the moving history 200. A plurality of records stored in the moving history 200 form a moving trajectory. The moving trajectory is a set of pieces of positional information of the same target person. Although the details will be described below with reference to Figs. 2A and 2B**,** positional information 210 and a target person moving history 220 are stored in the moving history 200.

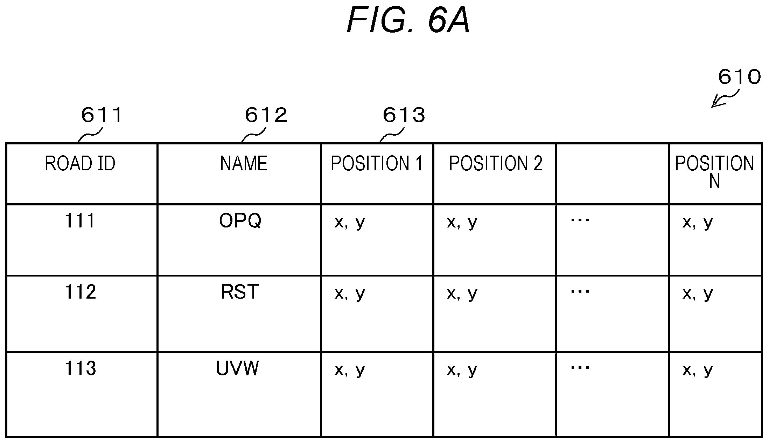

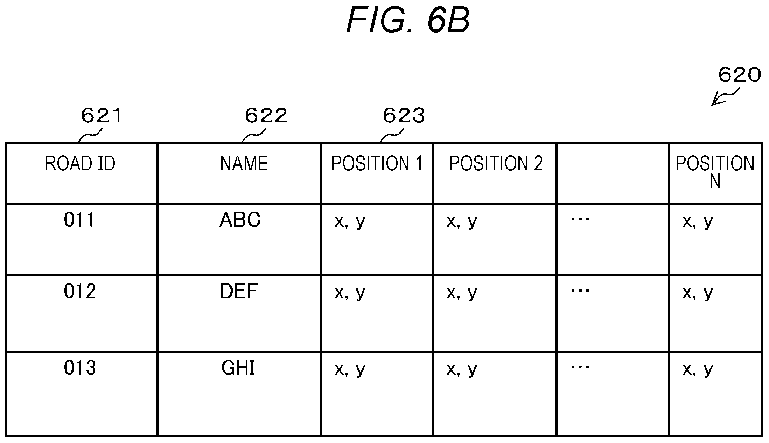

Subsequently, the map mapping unit 102 maps the moving trajectory including the moving history of the moving method determination target person to road network information 610 and route network information 620, and specifies a path along which the moving method determination target person passes. A method generally called map matching can be used as processing for specifying the path. The road network information 610 and the route network information 620 will be described below with reference to Figs. 6A and 6B.

The moving method determination unit 103 obtains a moving distance of the target person from the path, and calculates a movement speed by using the measurement timing included in the moving history. The moving method determination unit 103 determines a moving method of the moving method determination target person by comparing the moving speed with the determination rule 500.

When the determination result for the moving trajectory is a vehicle movement, the moving method determination unit 103 inquires of a publicly available bus information service, and acquires a route and service information of a transportation service that operates along the path, and positional information of the service (for example, bus) to a moving end date and time from a moving start date and time of a vehicle moving zone in the moving history. The moving method determination unit 103 calls the positional information mapping unit 106, and the positional information mapping unit 106 determines whether or not the target person uses the bus based on a relationship between the positional information of the target person and the positional information of the bus, and records the determination result in the moving history 200. Although the bus is used as an example of a transportation service in the following description, the present invention can be similarly applied to a service such as a tram provided by other transportation means.

Next, the information stored in the storage device 11 will be described with reference to Figs. 2A to 6B.

Fig. 2A illustrates an example of the positional information 210 transmitted from the target person application 900 to the transport mode determination computer 1. The positional information 210 includes a user ID 211 which is an identifier of the target person, a latitude 212, a longitude 213, and a date and time 214 when the positional information is received from the mobile terminal 9. For example, Fig. 2A represents that the mobile terminal 9 of a target person having a user ID "0001" is located at a position at which the latitude is 35.67 degrees and the longitude is 138.72 degrees at 8:10:23 a.m. on January 23, 2018. Such positional information is accumulated for all the target persons. Fig. 2A represents that the positional information at a certain point of time, but the past positional information is similarly accumulated in association with the user ID.

Fig. 2B illustrates the target person moving history 220 which is the moving history for each target person created based on the positional information 210. The target person moving history 220 includes a user ID 221, a latitude 222, a longitude 223, a date and time 224 when the positional information is received from the mobile terminal 9, a moving speed 225 obtained from a distance between the previous positional information previously received from the mobile terminal 9 and the positional information and an elapsed time from the previous date and time 224 to the date and time 224 when the positional information is received, a moving method 226 used to move from the previous positional information to the positional information, and a transportation service 227. The moving speed 225, the moving method 226, and the transportation service 227 are determined and recorded by the moving method determination unit 103.

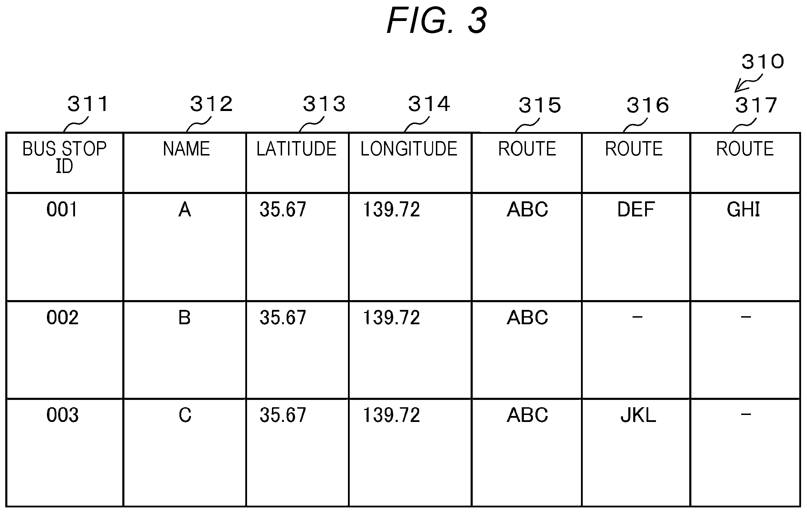

Fig. 3 illustrates the bus stop information 310 acquired by the moving method determination unit 103 from a server provided by a transportation operator. The bus stop information 310 includes a bus stop ID 311 which is an identifier of a bus stop, a name 312 of the bus stop, a latitude 313 and a longitude 314 of a place where the bus stop is provided, and an identifier 315 of a route which uses the bus stop. For example, Fig. 3 represents that bus stop A having a bus stop ID "001" is provided at a latitude of 35.67 degrees and a longitude of 139.72 degrees and is a stop of three routes ABC, DEF, and GHI.

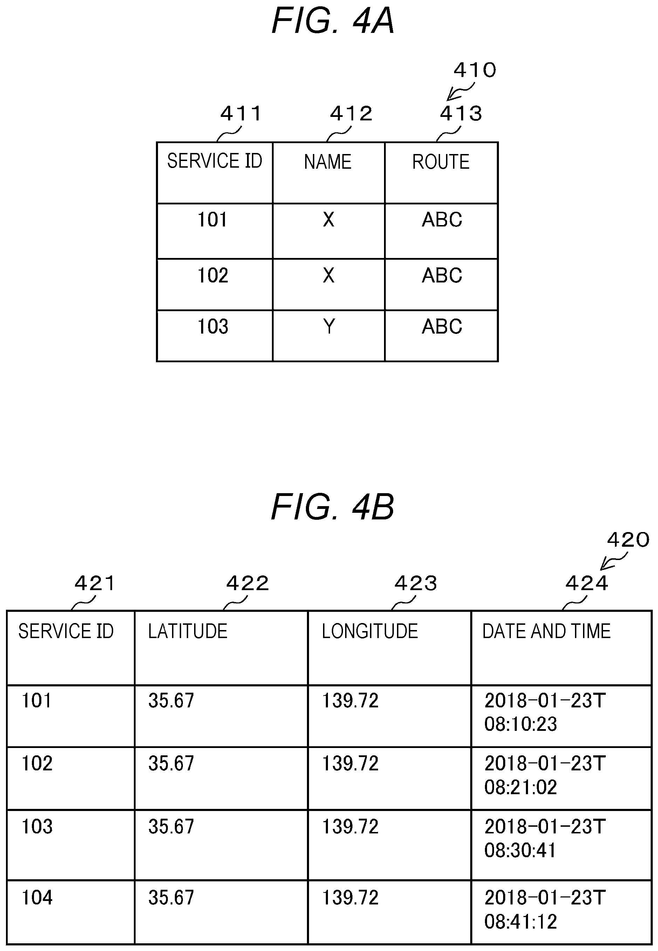

Fig. 4A illustrates the service information 410 of transportation means acquired by the moving method determination unit 103 from the server provided by the transportation operator. The service information 410 includes a service ID 411, a service name 412, and a route ID 413 to which the service belongs. For example, Fig. 4A represents that a service name having a service ID "101" is "X" and is a service using the route "ABC".

Fig. 4B illustrates the service positional information 420. The service positional information 420 includes a service ID 421, a latitude 422 and a longitude 423 which are the service positional information, and a measurement date and time 424. For example, Fig. 4B represents that a bus having a service ID "101" is located at a position at which the latitude is 35.67 degrees and the longitude is 139.72 at 8:10:23 a.m. on January 23, 2018. Such bus positional information is accumulated for all the services. Although Fig. 4B illustrates the service positional information at a certain point of time, the past positional information is similarly accumulated in association with the service ID. Although it has been described in the present embodiment that these pieces of information are acquired from the server provided by the transportation operator, these pieces of information may be accumulated in the computer 1 in advance.

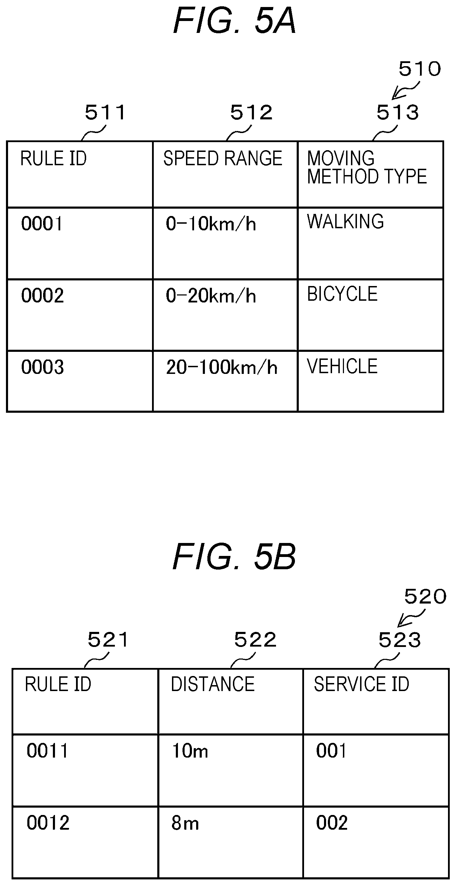

Fig. 5A illustrates a speed condition 510 stored as the determination rule 500. The speed condition 510 includes a rule ID 511, a moving method type 513, and a speed range 512 which is an upper limit value and a lower limit value of the speed of the target person for which the moving method is determined. For example, Fig. 5A represents that in the speed condition of the rule ID "0001", when the moving speed of the target person is "10 km/h" or less in a certain period, it is determined that the moving method is walking. Since the moving speed of a vehicle may be temporarily decreased depending on road conditions, when 90% of the speed observed in a certain period is within a range of the speed condition, it may be determined that the moving method is a vehicle.

Fig. 5B illustrates a distance condition 520 as the determination rule 500. The distance condition 520 includes a rule ID 521, a service ID 523, and a distance 522 which is an upper limit value of a distance between a position of the target person for determining that the target person is on the service and a position of the GPS mounted on the vehicle body of the service. For example, Fig. 5B represents that in the distance condition of the rule ID "0011", when a distance between the position of the target person on the bus having the service ID "001" and the GPS mounted on the bus is "10 m" or less, it is determined that the target person is on the bus. As will be described below, the moving method determination unit 103 determines that a user uses the service when the distance between the user and the GPS mounted on the service has a predetermined relationship.

The distance 522 is determined by a vehicle length of the service, but a length of a standard bus may be registered. Since there is an error in the positioning using the GPS, a value may be set in consideration of the error.

Fig. 6A is a diagram illustrating the road network information 610 included in the map information 700. The road network information includes a road ID 611, a name 612, and road positional information 613. The road positional information 613 includes a latitude and a longitude. The road positional information is a set of pieces of positional information. For example, Fig. 6A represents that a road having a road ID "11" is a road having a name "OPQ" and is a road extending from position 1 as a start point to position N as an end point.

Fig. 6B illustrates the route network information 620 included in the map information 700. The route network information 620 indicates a position of a route of a train or a bus on a map, and includes a route ID 621, a name 622 of the route, and route positional information 623. The route positional information 623 is a set of pieces of positional information including a latitude and a longitude. For example, Fig. 6B represents that a route name having a route ID "011" is "ABC" and is a route operated from position 1 as a start point to position N as an end point.

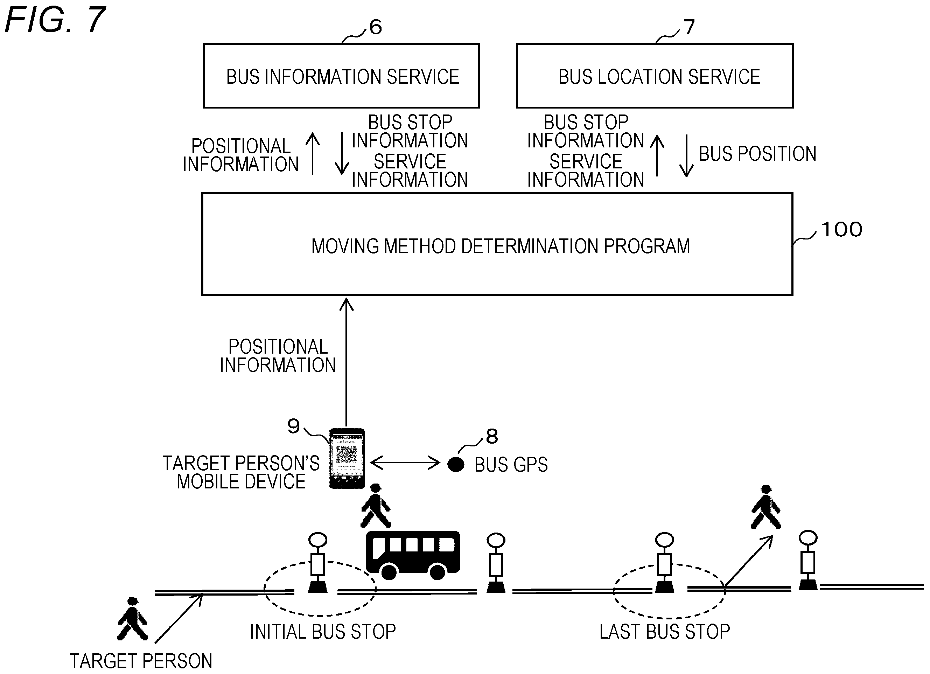

Fig. 7 is a conceptual diagram illustrating a usage form of the present system. The moving method determination program 100 collects the positional information of the target person from the target person application 900, and collects the bus stop information 310 and the service information 410 from a bus information service 6 (for example, a server having an application for providing the service) provided by a bus company. The moving method determination program 100 transmits the bus stop information 310 and the service information 410 collected from the bus information service 6 to a bus location service 7 (for example, a server having an application for providing the service), and collects the service positional information 420 from the bus location service 7. The moving method determination program 100 determines the moving method of the target person based on the determination rule 500.

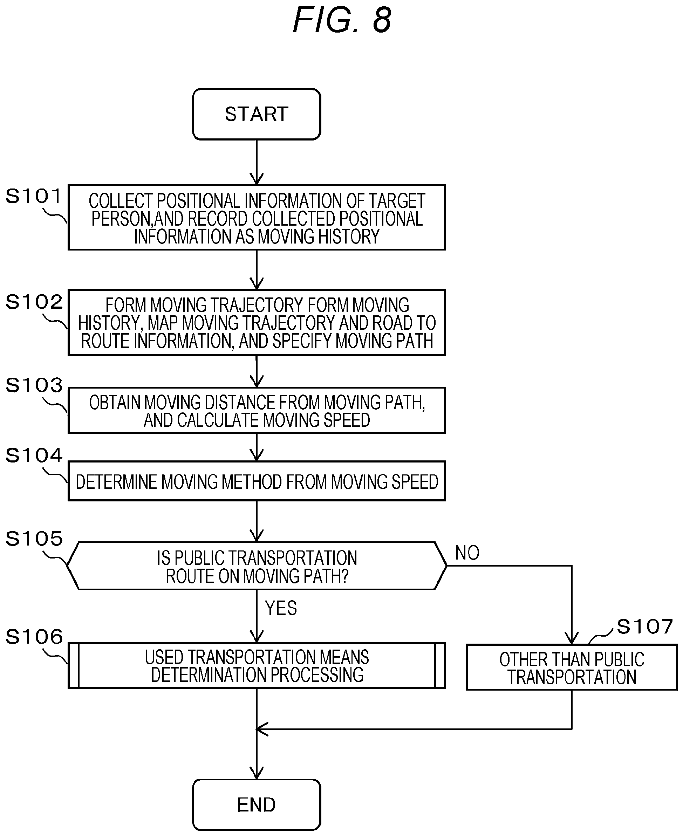

Fig. 8 is a flowchart illustrating a processing procedure of moving method determination processing. Initially, the travel history management unit 101 of the moving method determination program 100 receives the positional information 210 periodically transmitted by the target person application 900, and records the received positional information as the target person moving history 220 (S101). Although it has been described that the travel history management unit 101 periodically receives the positional information from the mobile terminal 9 in S101, the positional information may be received at any timing.

Subsequently, the map mapping unit 102 of the moving method determination program 100 forms the moving trajectory from the target person moving history 220, and searches for and acquires the road network information 610 and the route network information 620 present within a certain range from the formed moving trajectory from the map information 700. The map mapping unit 102 superimposes the acquired road network information 610 and route network information 620 on the moving trajectory by using a map matching method, and specifies a road or a route along which the target person is moving as a moving path (S102).

The moving method determination unit 103 determines that the target person passes a length of a portion where the moving trajectory is superimposed on the road or route specified in S102, obtains, as the moving distance of the target person, the length from the road positional information 613 and the route positional information 623, and obtains the moving speed from the moving distance, the moving start date and time, and the moving end date and time (S103).

The moving method determination unit 103 determines the moving method for the moving trajectory based on the moving speed obtained in S103 and the speed condition 510 of the determination rule 500, such as a vehicle, a train, or walking, and records the determined moving method in the moving method 226 of the target person moving history 220 (S104).

The moving method determination unit 103 determines whether or not the moving trajectory of the target person is on a route operated by a public transportation operator (S105). When the moving method determination unit 103 determines that the moving trajectory of the target person is on a route operated by a public transportation operator (S105; Yes), transportation means determination processing for determining the used transportation means by using the route as a moving method candidate is executed (S106). Meanwhile, when it is determined that the moving trajectory of the target person is not on a route operated by a public transportation operator (S105; No), the moving method determination unit 103 determines that the target person does not use the public transportation means, and ends the processing (S107).

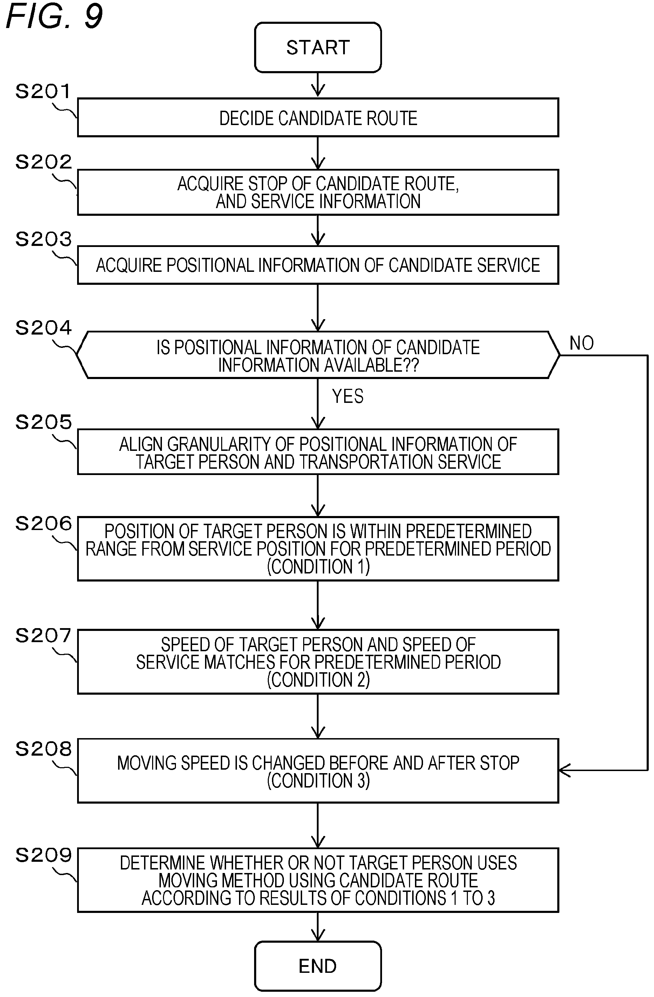

Fig. 9 is a flowchart illustrating a processing procedure of processing for determining the used transportation means in the moving method determination unit 103.

Initially, when the moving trajectory of the target person is on the route operated by the public transportation operator, the moving method determination unit 103 sets the route as the moving method candidate (S201).

Next, when it is determined in S104 of Fig. 8 that the moving method for the target person moving trajectory is a vehicle, the moving method determination unit 103 reads the date and time 224 when the target person moves by using the moving method from the target person moving history 220. The moving method determination unit 103 transmits a date and time 224 indicating an initial timing and a date and time 224 indicating a last time of the date and time 224 read from the target person moving history 220 to the disclosed bus information service 6, and acquires the bus stop information 310 and the transport information 410 of the transportation service that operates along the moving path specified in S102 of Fig. 8 from the date and time 224 indicating the initial time and the date and time 224 indicating the last date and time (S202).

Subsequently, the moving method determination unit 103 acquires the transport positional information 420 from the bus location service 7 for the bus route which is a candidate route (S203). When a company that operates the route does not disclose the bus location, the transport positional information 420 cannot be acquired. In this case, the determination processing using the positional information is skipped, and the processing proceeds to S208.

The moving method determination unit 103 determines whether or not the service positional information 420 on the candidate route is acquired (S204), calls the positional information mapping unit 106 when it is determined that the service positional information 420 on the candidate route is acquired (S204; Yes), determines whether or not the target person use the bus based on a relationship between the target person moving history 220 and the service positional information 420, and records the determination result in the target person moving history 220. This determination processing will be described below.

Initially, the moving method determination unit 103 aligns the granularity of the measurement of pieces of positional information of the target person and the bus. An interval at which the pieces of positional information of the target person and the bus are measured and transmitted to the computer 1 depends on the setting of the terminal. Therefore, the moving method determination unit 103 uses, as a reference, the positional information of either the target person or the bus, and obtains the position at the timing by interpolation based on positions before and after the position and the measurement timing when there is no positional information at the same timing as the timing of the positional information used as the reference in the other one (S205).

As condition 1, the moving method determination unit 103 determines whether or not the position of the target person is within the range of the distance 522 of the distance condition 520 of the determination rule 500 from the service positional information 420 for a predetermined time. For example, the moving method determination unit 103 determines whether or not positional information (latitude and longitude) of a latest record of the moving history information 220 of the target person illustrated in Fig. 2B (or latest positional information 210 of the target person illustrated in Fig. 2A) and positional information (latitude and longitude) of a latest record of the service positional information 420 illustrated in Fig. 4B are within the distance condition 520 (for example, 8 m) of the determination rule 500 illustrated in Fig. 5B for a predetermined time (for example, five minutes). When it is determined that both pieces of positional information are within the distance condition 520 of the determination rule 500 for the predetermined time, the moving method determination unit 103 determines that the target person uses the bus specified by the transport ID 520 (S206).

Next, as the condition 2, the moving method determination unit 103 reads the service positional information 420 corresponding to the service ID 520, the bus stop information 310 illustrated in Fig. 3, and the service information 410 illustrated in Fig. 4A by using the service ID 520 of the service of the candidate route obtained in S201, and calculates the speed of the bus near the bus stop (for example, 10 m before and after the position of the bus stop). When the calculated speed of the bus and the moving speed 225 of the target person included in the moving history information 220 continuously match for a predetermined time (for example, 5 minutes) or satisfy a predetermined condition in which a difference between the speeds falls within a predetermined ratio, the moving method determination unit 103 determines that the target person uses the bus specified by the transport ID 520 (S207). The moving speed of the target person and the moving speed of the bus may be compared with a value collected by an acceleration sensor of the mobile terminal together with the positional information.

As condition 3, the moving method determination unit 103 determines that the target person uses the bus of the route when by using the bus stop information 310 and the service information 410, a predetermined condition is satisfied in a relationship with a stop for which it is determined that the target person walks before the bus stop and uses the vehicle after passing the bus stop based on the fact that the moving speed 225 of the target person near the bus stop is increased after passing the bus stop and when a predetermined condition is satisfied in a relationship with a stop for which it is determined that the target person uses the vehicle before passing the bus stop and walks after passing the bus stop based on the fact that the moving speed is decreased after the target person passes the bus stop (S208).

Finally, the moving method determination unit 103 determines whether or not the target person uses the candidate route based on the determination results of S206 to S208, and records information indicating that the target person uses the candidate route in the transportation service 227 of the target person moving history 220 when it is determined that the target person uses the candidate route. For example, the moving method determination unit 103 may determine that the target person uses the candidate route when at least one of the aforementioned three conditions is satisfied, or may determine a probability of using the candidate route such as 30%, 60%, or 90% depending on the satisfied condition. For example, the moving method determination unit 103 records the bus route ID and the transport ID estimated to be used such as "bus route ABC used, transport ID 101".

As described above, according to the present embodiment, it is possible to distinguish between a target person using a bus and a target person using another vehicle. In the determination of the moving method using the positional information in the related art, it is possible to estimate a path on the way or a destination after the target person gets off the vehicle, and it is possible to determine an electric train on a railway or a ship on the sea by mapping the moving method to a map or a route map. Meanwhile, there are options such as walking, a bus, a private vehicle, a taxi, a bicycle, and a motorcycle on the road. Thus, among these options, walking, a bicycle, and a motorcycle could be determined as the moving method based on the moving speed and vibration characteristics, but it was not possible to determine whether the moving method using the vehicle was a bus, a private car, or a taxi. However, the determination can be performed by using the present system.

### Reference Signs List

1 transport mode determination computer
2 network
100 moving method determination program
9 target person's mobile device
5 bus
12 CPU
13 communication I/F
11 storage device
101 travel history management unit
102 map mapping unit
103 moving method determination unit (determination unit)
106 positional information mapping unit
110 database
210 positional information
220 target person moving history (moving history information)
310 bus stop information
410 service information
420 service positional information
510 speed condition
520 distance condition
610 road network information
620 route network information (route information)
900 target person application
6 bus information service
7 bus location service
8 bus GPS

## Claims

1. A moving method determination system comprising:
a map mapping unit (102) that specifies a path along which a user passes by using a moving trajectory of the user obtained from positional information (210) of a mobile terminal (9) of the user and map information;
a determination unit (103) that determines whether or not the moving trajectory of the user is on a route of transportation means (5) by using the specified path and route information (300) indicating a position of a route of the transportation means (5) used by the user; and
a positional information mapping unit (106) that determines whether or not the user uses a service of the transportation means (5) based on service information (410) of the transportation means (5) used by the user and a relationship between the positional information (210) and positional information (420) of the service of the transportation means (5) used by the user when it is determined that the moving trajectory of the user is on the route of the transportation means (5), and outputs a result of the determination when it is determined that the user uses the service of the transportation means (5) **characterized in that**;
the determination unit (103) determines that the user uses the service when the positional information mapping unit (106) determines that a distance between the user and a positioning unit mounted on the service has a predetermined relationship; and either:
the determination unit (103) calculates a moving speed of the service based on the positional information (420) of the service of the transportation means and the route information (300), and determines that the user uses the service when the calculated moving speed of the service and a moving speed of the user included in the positional information (210) satisfy a predetermined condition for a predetermined continuous time; or
the determination unit (103) determines that the user uses the service when a moving speed of the user near a stop satisfies a predetermined condition in a relationship with the stop by using stop information included in the route information (300) and the service information (410).

2. A moving method determination method comprising:
specifying, by a map mapping unit (102), a path along which a user passes by using a moving trajectory of the user obtained from positional information (210) of a mobile terminal (9) of the user and map information;
determining, by a determination unit (103), whether or not the moving trajectory of the user is on a route of transportation means (5) by using the specified path and route information (300) indicating a position of a route of the transportation means (5) used by the user; and
determining, by a positional information mapping unit (106), whether or not the user uses a service of the transportation means (5) based on service information (410) of the transportation means (5) used by the user and a relationship between the positional information (210) and positional information (420) of the service of the transportation means (5) used by the user when it is determined that the moving trajectory of the user is on the route of the transportation means (5), and outputting a result of the determination when it is determined that the user uses the service of the transportation means (5) **characterized in that**;
the determination unit (103) determines that the user uses the service when the positional information mapping unit (106) determines that a distance between the user and a positioning unit mounted on the service has a predetermined relationship; and either:
the determination unit (103) calculates a moving speed of the service based on the positional information (420) of the service of the transportation means (5) and the route information (300), and determines that the user uses the service when the calculated moving speed of the service and a moving speed of the user included in the positional information (210) satisfy a predetermined condition for a predetermined continuous time; or
the determination unit (103) determines that the user uses the service when a moving speed of the user near a stop satisfies a predetermined condition in a relationship with the stop by using stop information included in the route information (300) and the service information (410).

## Patentansprüche

1. Bewegungsverfahren-Bestimmungssystem, umfassend:
eine Kartenzuordnungseinheit (102), die einen Weg spezifiziert, den ein Benutzer zurücklegt, indem eine Bewegungsbahn des Benutzers, die von Positionsinformationen (210) eines mobilen Endgeräts (9) des Benutzers erhalten werden, und Karteninformationen verwendet werden;
eine Bestimmungseinheit (103), die bestimmt, ob die Bewegungsbahn des Benutzers auf einer Route eines Transportmittels (5) ist, indem der spezifizierte Weg und Routeninformationen (300) verwendet werden, die eine Position einer Route des Transportmittels (5), das von dem Benutzer verwendet wird, angeben; und
eine Positionsinformationen-Zuordnungseinheit (106), die bestimmt, ob der Benutzer einen Dienst des Transportmittels (5) benutzt, basierend auf Dienstinformationen (410) des Transportmittels (5), das von dem Benutzer verwendet wird, und einer Beziehung zwischen den Positionsinformationen (210) und von Positionsinformationen (420) des Diensts des Transportmittels (5), das von dem Benutzer verwendet wird, wenn bestimmt wird, dass die Bewegungsbahn des Benutzers auf der Route des Transportmittels (5) ist, und die ein Ergebnis der Bestimmung ausgibt, wenn bestimmt wird, dass der Benutzer den Dienst des Transportmittels (5) verwendet,
**dadurch gekennzeichnet, dass**:
die Bestimmungseinheit (103) bestimmt, dass der Benutzer den Dienst verwendet, wenn die Positionsinformationen-Zuordnungseinheit (106) bestimmt, dass ein Abstand zwischen dem Benutzer und einer Positionierungseinheit, die auf dem Dienst befestigt ist, eine vorbestimmte Beziehung aufweist; und dass entweder:
die Bestimmungseinheit (103) eine Bewegungsgeschwindigkeit des Diensts basierend auf den Positionsinformationen (420) des Diensts des Transportmittels und den Routeninformationen (300) berechnet, und bestimmt, dass der Benutzer den Dienst verwendet, wenn die berechnete Bewegungsgeschwindigkeit des Diensts und eine Bewegungsgeschwindigkeit des Benutzers, die in den Positionsinformationen (210) enthalten ist, eine vorbestimmte Bedingung für eine vorbestimmte kontinuierliche Zeitspanne erfüllen; oder
die Bestimmungseinheit (103) bestimmt, dass der Benutzer den Dienst verwendet, wenn eine Bewegungsgeschwindigkeit des Benutzers nahe an einem Halt eine vorbestimmte Bedingung in einer Beziehung mit dem Halt erfüllt, indem Haltinformationen, die in den Routeninformationen (300) und den Dienstinformationen (410) enthalten sind, verwendet werden.

2. Bewegungsverfahren-Bestimmungsverfahren, umfassend:
Spezifizieren eines Wegs, den ein Benutzer zurücklegt, indem eine Bewegungsbahn des Benutzers, die von Positionsinformationen (210) eines mobilen Endgeräts (9) des Benutzers erhalten werden, und Karteninformationen verwendet werden, durch eine Kartenzuordnungseinheit (102);
Bestimmen, ob die Bewegungsbahn des Benutzers auf einer Route eines Transportmittels (5) ist, indem der spezifizierte Weg und Routeninformationen (300) verwendet werden, die eine Position einer Route des Transportmittels (5), das von dem Benutzer verwendet wird, angeben, durch eine Bestimmungseinheit (103); und
Bestimmen, ob der Benutzer einen Dienst des Transportmittels (5) benutzt, basierend auf Dienstinformationen (410) des Transportmittels (5), das von dem Benutzer verwendet wird, und einer Beziehung zwischen den Positionsinformationen (210) und von Positionsinformationen (420) des Diensts des Transportmittels (5), das von dem Benutzer verwendet wird, durch eine Positionsinformationen-Zuordnungseinheit (106), wenn bestimmt wird, dass die Bewegungsbahn des Benutzers auf der Route des Transportmittels (5) ist, und die ein Ergebnis der Bestimmung ausgibt, wenn bestimmt wird, dass der Benutzer den Dienst des Transportmittels (5) verwendet,
**dadurch gekennzeichnet, dass**:
die Bestimmungseinheit (103) bestimmt, dass der Benutzer den Dienst verwendet, wenn die Positionsinformationen-Zuordnungseinheit (106) bestimmt, dass ein Abstand zwischen dem Benutzer und einer Positionierungseinheit, die auf dem Dienst befestigt ist, eine vorbestimmte Beziehung aufweist; und dass entweder:
die Bestimmungseinheit (103) eine Bewegungsgeschwindigkeit des Diensts basierend auf den Positionsinformationen (420) des Diensts des Transportmittels (5) und den Routeninformationen (300) berechnet, und bestimmt, dass der Benutzer den Dienst verwendet, wenn die berechnete Bewegungsgeschwindigkeit des Diensts und eine Bewegungsgeschwindigkeit des Benutzers, die in den Positionsinformationen (210) enthalten ist, eine vorbestimmte Bedingung für eine vorbestimmte kontinuierliche Zeitspanne erfüllen; oder
die Bestimmungseinheit (103) bestimmt, dass der Benutzer den Dienst verwendet, wenn eine Bewegungsgeschwindigkeit des Benutzers nahe an einem Halt eine vorbestimmte Bedingung in einer Beziehung mit dem Halt erfüllt, indem Haltinformationen, die in den Routeninformationen (300) und den Dienstinformationen (410) enthalten sind, verwendet werden.

## Revendications

1. Système de détermination de procédé de déplacement, comprenant :
une unité de cartographie de carte (102) qui spécifie un trajet le long duquel un utilisateur passe en utilisant une trajectoire de déplacement de l'utilisateur obtenue à partir d'informations de position (210) d'un terminal mobile (9) de l'utilisateur et d'informations de carte ;
une unité de détermination (103) qui détermine si oui ou non la trajectoire de déplacement de l'utilisateur se trouve sur un itinéraire de moyen de transport (5) en utilisant les informations de trajet et d'itinéraire spécifiées (300) indiquant une position d'un itinéraire du moyen de transport (5) utilisé par l'utilisateur ; et
une unité de cartographie d'informations de position (106) qui détermine si l'utilisateur utilise ou non un service du moyen de transport (5) sur la base d'informations de service (410) du moyen de transport (5) utilisé par l'utilisateur et d'une relation entre les informations de position (210) et les informations de position (420) du service du moyen de transport (5) utilisé par l'utilisateur lorsqu'il est déterminé que la trajectoire de déplacement de l'utilisateur se trouve sur l'itinéraire du moyen de transport (5), et délivre en sortie un résultat de la détermination lorsqu'il est déterminé que l'utilisateur utilise le service du moyen de transport (5), **caractérisé en ce que** :
l'unité de détermination (103) détermine que l'utilisateur utilise le service lorsque l'unité de cartographie d'informations de position (106) détermine qu'une distance entre l'utilisateur et une unité de positionnement montée sur le service présente une relation prédéterminée ; et :
l'unité de détermination (103) calcule une vitesse de déplacement du service sur la base des informations de position (420) du service du moyen de transport et des informations d'itinéraire (300), et détermine que l'utilisateur utilise le service lorsque la vitesse de déplacement calculée du service et une vitesse de déplacement de l'utilisateur incluse dans les informations de position (210) satisfont à une condition prédéterminée pendant un temps continu prédéterminé ; ou
l'unité de détermination (103) détermine que l'utilisateur utilise le service lorsqu'une vitesse de déplacement de l'utilisateur à proximité d'un arrêt satisfait une condition prédéterminée dans une relation avec l'arrêt en utilisant des informations d'arrêt incluses dans les informations d'itinéraire (300) et les informations de service (410).

2. Procédé de détermination de procédé de déplacement, comprenant les étapes consistant à :
spécifier, par l'intermédiaire d'une unité de cartographie (102), un trajet le long duquel un utilisateur passe en utilisant une trajectoire de déplacement de l'utilisateur obtenue à partir d'informations de position (210) d'un terminal mobile (9) de l'utilisateur et d'informations de cartographie ;
déterminer, par l'intermédiaire d'unité de détermination (103), si la trajectoire de déplacement de l'utilisateur se trouve ou non sur un itinéraire de moyen de transport (5) en utilisant les informations de trajet et d'itinéraire spécifiées (300) indiquant une position d'un itinéraire du moyen de transport (5) utilisé par l'utilisateur ; et
déterminer, par l'intermédiaire d'une unité de cartographie d'informations de position (106), si l'utilisateur utilise ou non un service du moyen de transport (5) sur la base d'informations de service (410) du moyen de transport (5) utilisé par l'utilisateur et d'une relation entre les informations de position (210) et les informations de position (420) du service du moyen de transport (5) utilisé par l'utilisateur lorsqu'il est déterminé que la trajectoire de déplacement de l'utilisateur se trouve sur l'itinéraire du moyen de transport (5), et délivre en sortie un résultat de la détermination lorsqu'il est déterminé que l'utilisateur utilise le service du moyen de transport (5), **caractérisé en ce que** :
l'unité de détermination (103) détermine que l'utilisateur utilise le service lorsque l'unité de cartographie d'informations de position (106) détermine qu'une distance entre l'utilisateur et une unité de positionnement montée sur le service présente une relation prédéterminée ; et :
l'unité de détermination (103) calcule une vitesse de déplacement du service sur la base des informations de position (420) du service des moyens de transport (5) et des informations d'itinéraire (300), et détermine que l'utilisateur utilise le service lorsque la vitesse de déplacement calculée du service et une vitesse de déplacement de l'utilisateur incluse dans les informations de position (210) satisfont à une condition prédéterminée pendant un temps continu prédéterminé ; ou
l'unité de détermination (103) détermine que l'utilisateur utilise le service lorsqu'une vitesse de déplacement de l'utilisateur à proximité d'un arrêt satisfait une condition prédéterminée dans une relation avec l'arrêt en utilisant des informations d'arrêt incluses dans les informations d'itinéraire (300) et les informations de service (410).
